# FASCICULE DE BREVET EUROPEEN

(11) **EP 0 854 300 B1**
(45) Date de publication et mention de la délivrance du brevet: **27.03.2002**
(21) Numéro de dépôt: 97402605.6
(22) Date de dépôt: 31.10.1997
(51) Int. Cl.: F16B 41/00

(54) **Dispositif de retenue d'une vis sur un support**
Vorrichtung zur Halterung einer Schraube auf einer Unterlage
Device for holding a screw on a support

(30) Priorité: 21.01.1997 FR 9700586
(43) Date de publication de la demande: 22.07.1998
(73) Titulaire: RAPID S.A., F-75852 Paris Cédex 17 (FR)
(72) Inventeur: Leon, Jean-Pierre, René, 78800 Houilles (FR); Perra, Nicolas, Christophe, 95300 Pontoise (FR)
(74) Mandataire: Thinat, Michel

(56) Documents cités:
- FR-A- 2 578 009

## Description

La présente invention a essentiellement pour objet un dispositif de retenue d'un élément fileté, tel que par exemple une vis, sur un support ou une pièce quelconque destinée à être fixée par vissage sur une autre pièce.

On connaît depuis longtemps des systèmes permettant de rendre les vis imperdables, c'est-à-dire des systèmes susceptibles de retenir la vis sur une pièce avant fixation par vissage de cette pièce sur une autre pièce ou bien après désolidarisation des deux pièces.

En effet, en l'absence de tout système de retenue de la vis, cette dernière peut échapper à la pièce avant montage ou après démontage, ce qui peut être particulièrement gênant dans par exemple les assemblages réalisés dans les armoires électriques.

Aussi, pour remédier à cet inconvénient, on a déjà proposé notamment des rondelles avec languettes internes pouvant s'accrocher sur la tige de la vis pour la rendre imperdable une fois qu'elle est introduite dans l'orifice de la pièce à assembler par vissage avec une autre pièce.

Toutefois, ce genre de système de retenue n'est pas sans présenter de nombreux inconvénients.

En effet, il faut monter les rondelles sur la vis par l'extrémité libre de cette vis. De plus, en enfilant la rondelle sur la vis, il y a un risque non négligeable de détériorer le filetage de cette vis. Il faut encore ajouter que l'encombrement des systèmes de retenue connus est relativement important et peut gêner l'assemblage de deux pièces ou panneaux superposés. Enfin, les rondelles de retenue utilisées jusqu'à maintenant suivent mal le vissage et le dévissage de la vis lorsqu'on assemble les deux pièces par vissage.

Aussi, la présente invention a pour but de remédier notamment aux inconvénients ci-dessus en proposant un dispositif de retenue qui peut être monté très facilement et rapidement sur la tige de la vis, qui, en toutes circonstances, suit les mouvements de la vis, et qui ne risque en aucun cas de détériorer le filetage de la vis quel que soit son mouvement dans le support ou la pièce qu'elle traverse.

A cet effet, l'invention a pour objet un dispositif de retenue d'une vis au moyen d'une bague, sur un support ou analogue traversé par ladite vis, caractérisé en ce que la bague est élastiquement déformable et comporte, suivant une génératrice, une fendue pour permettre le clippage de cette bague sur la tige filetée de la vis suivant une direction orthogonale à l'axe de la tige, laquelle fente, à l'état monté, possède une largeur inférieure au diamètre intérieur de la bague et au diamètre extérieur de la tige de la vis.

On précisera ici que la fente est délimitée par un angle-dièdre au centre inférieur à 180°, de préférence égal à environ 100°.

Suivant encore une autre caractéristique de ce dispositif, la bague comporte à l'une de ses extrémités un épaulement susceptible d'être retenu dans un chambrage ménagé dans le support.

Mais d'autres caractéristiques et avantages de l'invention apparaîtront mieux dans la description détaillée qui suit et se réfère aux dessins annexés, donnés uniquement à titre d'exemple, et dans lesquels :
La figure 1 est une vue en coupe axiale de la bague de retenue selon cette invention, faite suivant la ligne I-I de la figure 2.
La figure 2 est une vue de dessus de la bague suivant la flèche II de la figure 1.
La figure 3 est encore une vue en coupe axiale de la bague mais montrée ici en position clippée sur la tige d'une vis, et logée dans le trou d'un support ou d'une pièce traversée par la vis.
La figure 4 est une vue partielle et en perspective d'un support ou analogue traversé par une vis retenue sur ce support et destiné à être fixé par vissage sur une pièce quelconque.

Suivant un exemple de réalisation, et en se reportant aux figures, on voit qu'un dispositif de retenue d'une vis V selon cette invention comprend essentiellement une bague élastiquement déformable 1, réalisée par exemple en une matière synthétique appropriée, cette bague présentant une forme générale cylindrique et comportant, suivant une génératrice, une fente 2 permettant son clippage sur la tige filetée 30 de la vis V, lequel clippage est effectué suivant une direction orthogonale à l'axe X-X' de la tige 30.

Ainsi, la bague 1 pourra être montée immédiatement à l'endroit voulu sur la tige 30 de la vis V, et cela par un simple clippage permis par l'expansion radiale de la bague 1 lors de son insertion sur la tige 30, ce après quoi ladite bague vient enserrer partiellement ladite tige.

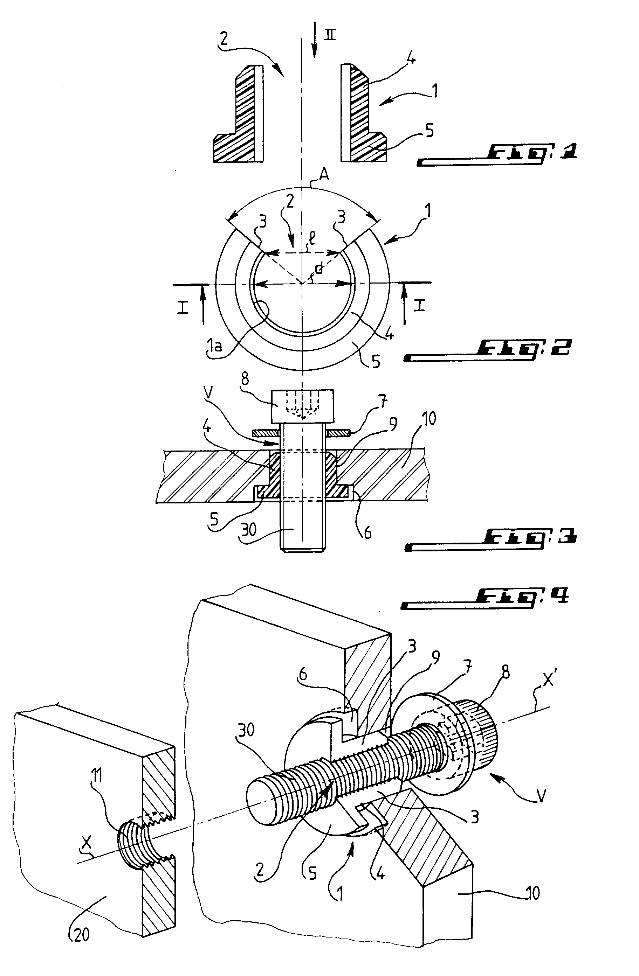

Suivant l'exemple représenté, et comme on le voit bien sur la figure 2, la fente 2 de la bague 1 possède, au niveau de la périphérie interne la de la bague 1, une largeur l qui est inférieure au diamètre intérieur d de ladite bague. Egalement, la largeur l de la fente 2 sera inférieure au diamètre extérieur de la tige 30 de la vis V.

Ceci signifie que la fente 2 comporte des bords 3 et est délimitée par un angle-dièdre au centre A qui est inférieur à 180°, comme on le voit bien encore sur la figure 2. La valeur de cet angle au centre sera fonction notamment de la matière utilisée pour la bague 1, et donc de son élasticité radiale.

Suivant l'exemple de réalisation représenté, la fente 2 est délimitée par un angle au centre égal à environ 100°, mais d'autres valeurs d'angle au centre pour la fente 2 pourraient parfaitement être adoptées sans sortir du cadre de l'invention.

La bague 1 se compose d'une partie 4 en forme de fût intérieurement cylindrique et lisse, qui se termine à l'une de ses extrémités par un épaulement annulaire fendu 5 susceptible de se loger et d'être retenu dans un chambrage 6 ménagé dans un support, une pièce ou analogue 10 traversé par la vis V, comme on le voit bien sur les figures 3 et 4.

On a montré en 7 sur ces figures une rondelle classique interposée entre la tête 8 de la vis V et le support 10 lorsque ce support est fixé par vissage sur une autre pièce quelconque repérée en 20 sur la figure 4.

Pour réaliser l'assemblage des pièces 10 et 20, on procède de la façon suivante.

La vis V est introduite au travers d'un orifice 9 prévu dans le support 10. Ensuite, la bague 1 est clippée sur la vis V suivant une direction orthogonale à l'axe X-X' de cette vis, de sorte que la bague 1 viendra enserrer la tige 30 de la vis V en s'accrochant sur le filetage de la tige.

On pourra alors procéder à l'assemblage, c'est-à-dire au vissage de la vis V dans le trou taraudé 11 prévu dans la pièce 20. En fin de vissage, l'épaulement 5 de la bague fendue 1 viendra s'escamoter dans le chambrage 6 du support 10.

Il est à noter que lors de l'assemblage, la bague fendue 1 suivra avantageusement tous les mouvements de la vis sans aucun risque de détérioration du filetage de cette vis.

Bien entendu, l'invention n'est nullement limitée au mode de réalisation décrit et illustré qui n'a été donné qu'à titre d'exemple.

C'est ainsi que la fente de la bague peut être délimitée par un angle au centre de valeur quelconque et inférieur à 180°, cela étant par exemple fonction du degré de serrage de la bague sur la vis que l'on souhaite, pour retenir ladite vis sur le support qu'elle traverse. De même, le matériau constituant cette bague fendue pourra être un matériau élastiquement déformable quelconque et approprié.

## Revendications

1. Dispositif de retenue d'une vis (V), au moyen d'une bague (1), sur un support ou analogue (10) traversé par ladite vis, **caractérisé en ce que** la bague (1) est élastiquement déformable et comporte, suivant une génératrice, une fente (2) pour permettre le clippage de cette bague sur la tige filetée (30) de la vis (V) suivant une direction orthogonale à l'axe (X-X') de la tige (30), laquelle fente (2), à l'état non monté, possède une largeur (1) inférieure au diamètre intérieur (d) de la bague (1) et au diamètre extérieur de la tige (30) de la vis.

2. Dispositif selon la revendication 1, **caractérisé en ce que** la fente (2) est délimitée par un angle-dièdre au centre (A) inférieur à 180°, de préférence égal à environ 100°.

3. Dispositif selon la revendication 1 ou 2, **caractérisé en ce que** la bague (1) comporte à l'une de ses extrémités un épaulement (5) susceptible d'être retenu dans un chambrage (6) ménagé dans le support (10).

## Patentansprüche

1. Vorrichtung zur Halterung einer Schraube (V) mittels eines Rings (1) auf einer Unterlage oder dergleichen (10), die durch besagte Schraube durchquert wird, **dadurch gekennzeichnet, daß** der Ring (1) elastisch verformbar ist und gemäß einer Mantellinie einen Schlitz (2) umfaßt, um das Klippen dieses Rings auf dem Gewindestift (30) der Schraube (V) gemäß einer zur Achse (X-X') des Stiftes (30) orthogonalen Richtung erlaubt, wobei der Stift (2) im nicht aufgebauten Zustand eine Breite (1) besitzt, die geringer als der Innendurchmesser (d) des Rings (1) und des Außendurchmessers des Stiftes (30) der Schraube ist.

2. Vorrichtung gemäß Anspruch 1, **dadurch gekennzeichnet, daß** der Schlitz (2) durch einen Diederwinkel im Zentrum (A) begrenzt ist, der geringer als 180°, bevorzugt gleich ungefähr 100° ist.

3. Vorrichtung gemäß Anspruch 1 oder 2, **dadurch gekennzeichnet, daß** der Ring (1) an einem seiner Enden einen Ansatz (5) umfaßt, der geeignet ist, in einer im Untersatz (10) ausgesparten Einschließung (6) zurückgehalten zu werden.

## Claims

1. Device for holding a screw (V), by means of a ring (1), on a support or the like (10) crossed through by said screw, **characterized in that** the ring (1) is resiliently distortable and comprises, according a generatrix, a slot (2) for clipping this ring on the threaded rod (30) of the screw (V) according to a direction which is orthogonal to axis (X-X') of the rod (30), which slot (2), in a non-mounted state, has a width (1) which is smaller than the inner diameter (d) of the ring (1) and than the outer diameter of the rod (30) of the screw.

2. Device according to claim 1, **characterized in that** the slot (2) is delimited by a diedral angle (A) smaller than 180°, preferably equal to about 100°.

3. Device according to claim 1 or 2, **characterized in that** the ring (1) has one of its ends which comprises a shoulder (5) capable of being held in a recess (6) provided in the support (10).
